# EUROPEAN PATENT APPLICATION

(11) **EP 1 074 926 A2**
(43) Date of publication of application: **07.02.2001**
(21) Application number: 00306701.4
(22) Date of filing: 07.08.2000
(51) Int. Cl.: G06F 17/30, H04N 7/00, G06K 9/20

(54) **Method of and apparatus for retrieving text data from a video signal**

(30) Priority: 06.08.1999 GB 9918646
(71) Applicant: Television Monitoring Services Limited, Witney, Oxfordshire OX8 5LA (GB)
(72) Inventor: Hay, Cameron, Witney, Oxfordshire OX8 5LA (GB)
(74) Representative: Cozens, Paul Dennis

(57) **Abstract**

In order to retrieve text data from a video signal comprising a series of frames (such as a broadcast television signal, or a playback signal of a recording of a broadcast television signal), a sequence of the frames from the video signal is captured. For each captured frame in the sequence, it is determined whether or not a ratio of luminance of a brightest part of that captured frame relative to average luminance of that captured frame exceeds a ratio threshold. If so, a character recognition process is performed on that frame to detect text in that frame.

The invention takes advantage of the fact that, in order for the text to be legible to the viewer, it is generally enhanced relative to the background by giving it much greater luminance than the rest of the image. A simple luminance ratio test on the frame can therefore be used to identify frames likely to contain text, and the character recognition process need be performed only on those identified frames. Typically, the number of frames containing text is far less than the total number of frames in a television programme, and so this opens up the possibility of retrieving text data in "effective" real time.

## Description

### BACKGROUND TO THE INVENTION

### Field of the Invention

This invention relates to a method of and apparatus for retrieving text data from a video signal and, more particularly but not exclusively, for reading of information conveyed in text within the credits of a broadcast television programme.

### Description of the Prior Art

Currently, a large number of different institutions around the world monitor television broadcasts for various purposes. In many cases, there are several institutions in each country performing the same task. Generally this is done manually. With the increasing numbers of channels broadcast, the task is expensive and unreliable.

The reasons for monitoring broadcasts are numerous. For example, programme producers may wish to verify where and when their programmes were broadcast in order to check copyright returns from the broadcasters. The information is also required for audience research.

Prior art solutions to improve on simply watching and noting down details of programmes have been limited to scrolling through time-lapse video recordings of the channels in order to limit the volume of images recorded and to reduce the time needed to monitor a channel.

### SUMMARY OF THE INVENTION

An object of the present invention is to provide an improved method of, and apparatus for, retrieving text data from a video signal.

In accordance with a first aspect of the present invention, there is provided a method of retrieving text data from a video signal comprising a series of frames (such as a broadcast television signal, or a playback signal of a recording of a broadcast television signal), the method comprising the steps of: capturing a sequence of the frames from the video signal; and, for each captured frame in the sequence, determining whether or not a ratio of luminance of a brightest part of that captured frame relative to average luminance of that captured frame exceeds a ratio threshold and, if so, performing a character recognition process on that frame to detect text in that frame.

The invention takes advantage of the fact that, in order for the text to be legible to the viewer, it is generally enhanced relative to the background by giving it much greater luminance than the rest of the image. A simple luminance ratio test on the frame can therefore be used to identify frames likely to contain text, and the character recognition process need be performed only on those identified frames. Typically, the number of frames containing text is far less than the total number of frames in a television programme, and so this opens up the possibility of retrieving text data in "effective" real time.

The method may further comprise the step of storing the detected text, for example in a database. The integrity of the data can be enhanced by spell checking it against a database of known titles and personal names of those involved in the production business. Since such a system will read with a high accuracy all the text data that is broadcast for a programme, a database of all the information contained in the rolling credits can be created. This data, together with data relating to the channel monitored and time stamp information is invaluable in copyright and contract enforcement work, as well as in many other applications.

Additionally, or alternatively, the method may further comprise the step of controlling an apparatus (such as a video recorder or a routing switch to an Internet site) in dependence upon the detected text.

Preferably, the method further comprises the step of temporarily storing each captured frame before performing the determining step, in order to provide a form of frame buffering.

Preferably, the method further comprises the step of storing each frame for which it determined that the ratio exceeds the ratio threshold, so that post-processing may be performed on that frame. In this case, the method preferably further comprises the step of discarding each frame for which it determined that the ratio does not exceed the ratio threshold, so that storage space is not unnecessarily taken up.

In the case where each captured frame comprises a pair of captured fields of interlaced lines, problems may arise if the text is moving quickly in the image, particularly in the horizontal direction, due to the temporal spacing between the captured fields, which may result in jagged outlines of the characters in the text which will be difficult to recognise. To deal with this problem, the method may further comprise the step, before the determining step, of transforming each captured frame to average spatially-adjacent pairs of lines in that frame. Alternatively, the method may further comprise the step, before the determining step, of transforming each captured frame by discarding one of the respective captured fields. However, this will halve the height of the frame. To restore the height of the frame, the method may further comprise the further step, before the determining step, of transforming each captured frame by synthesising the respective discarded field from the other captured field, for example by repetition or interpolation.

The video signal will have a frame rate (for example of 30 Hz, 29.97 Hz or 25 Hz, depending upon the signal format), and the captured images are preferably captured at a capture rate (for example 1 Hz) slower than the frame rate.

The ratio threshold may be fixed or preset. However, the method may further comprise the step of varying the ratio threshold.

In the case where the video signal is a colour video signal, the method preferably further comprises the step, before the character recognition step, of transforming each captured frame to a black-and-white frame (ie one bit per pixel) in dependence upon a luminance threshold. The luminance threshold may be fixed or preset. However, the method may further comprise the step of varying the luminance threshold.

In accordance with a second aspect of the present invention, there is provided a method of retrieving text data from a broadcast image, comprising the steps of: capturing a sequence of frame images from a source at predetermined intervals; processing the frame images; measuring a ratio of the luminance of a brightest part of the processed frame image relative to a background part of the processed frame image; selecting processed frame images where the ratio exceeds a predetermined threshold; and processing the selected images with OCR software to read text in the selected images.

In accordance with a third aspect of the present invention, there is provided an apparatus for retrieving text data from a video signal comprising a series of frames, the apparatus comprising: means (such as a frame grabber) for capturing a sequence of the frames from the video signal; means (such as a programmed processor and associated memory) for determining whether or not a ratio of luminance of a brightest part of each captured frame relative to average luminance of that captured frame exceeds a ratio threshold; and means (such as the, or another, programmed processor and associated memory) for performing a character recognition process on that frame to detect text in that frame.

In accordance with a fourth aspect of the present invention, there is provided an apparatus for retrieving text data from a broadcast image, comprising: means (such as a frame grabber) for capturing a sequence of frame images from a source at predetermined intervals; means (such as a programmed processor and associated memory) for processing the frame images; means (such as the, or another, programmed processor and associated memory) for measuring a ratio of the luminance of a brightest part of the processed frame image relative to a background part of the processed frame image; means (such as the, or another, programmed processor and associated memory) for selecting processed frame images where the ratio exceeds a predetermined threshold; and means (such as the, or another, programmed processor and associated memory) for processing the selected images with OCR software to read text in the selected images.

It will be appreciated that the real-time retrieval of text data from a broadcast image has many useful applications that will be apparent to the person skilled in the art.

### BRIEF DESCRIPTION OF THE DRAWINGS

- Figure 1: is a block diagram of an apparatus forming an embodiment of the invention;
- Figures 2A-D: show a series of sample frames created using the apparatus of Figure 1; and
- Figures 3A-C: are a series of flow diagrams to illustrate the method of operation of the apparatus of Figure 1.

### DETAILED DESCRIPTION OF THE PREFERRED EMBODIMENTS

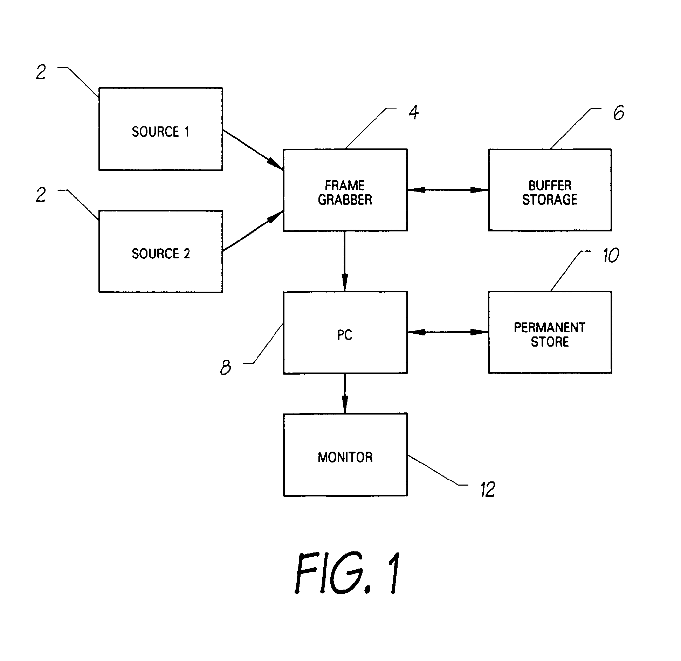

Referring to Figure 1, a source 2 provides an output in the form of a video signal. Figure 1 shows two alternative sources 2 to illustrate that the source 2 may be derived from a variety of video stream types such as:
- directly off air (terrestrial analogue and digital signals, satellite and cable transmissions);
- from videotape onto which the broadcast has been recorded for subsequent processing;
- from the output of a decoder in the case of digital or pay channels; and
- from the output of a DVD (digital versatile disc) source whose playback is through a standard SCART, RF or S-Video connector in order to provide a video signal. (The stored signal on a DVD is compressed in MPEG-2 format, a compression technique which stores the changing pixels from one frame to the next. Therefore, it is not possible to store a single frame image to process if the content of the DVD is not played back as mentioned.)

A frame grabber 4 is connected to the output of the source 2. The frame grabber 4 is set to sample the source at a rate selected so that any text data will show in at least one frame. A rate of one frame per second would normally ensure that several frames of any relevant text will be captured. Preferably, the system allows a predetermined interval between frame captures to be set by the user depending on the circumstances of the application. For example, if the system is to be used to retrieve subliminal text broadcast for such a short period that it is below the threshold of viewer perception, the predetermined interval must be sufficiently short to ensure that one of the few frames containing the text to be retrieved is captured.

Suitable frame grabbers include a SNAPPER (Trade Mark) board which contains circuitry to convert the captured frame image into a compressed digital image in JPEG format. Alternatively, a BRONCO (Trade Mark) frame grabber that outputs a bitmap image may be used.

The captured frame images are passed to a memory 6 for buffer storage. At this stage, the typical size of a single frame image will be about 1.2 Mbytes.

A processor 8 then processes the captured frame images. The processor 8 can be the CPU of a PC.

One processing step is to convert the captured frame image to a black and white image.

A technical problem that this processing is designed to overcome is the disturbance to text characters caused by the interlaced raster scans of a television picture. Since a captured frame image will include parts of two separate interfaces, the processor 8 separates the interlaces by taking an average of the adjacent lines, which come from the separate interlaces. The further processing is carried out on the averaged value only.

Additional processing steps may be carried out to identify and remove background information from the,image. The term background in this context means image data that appears behind text data usually at a lower luminance. This background material is liable to change more rapidly from frame to frame than the text elements of the captured frame image. This aids identification of background material for elimination.

The objective is to prepare an image that can be converted to produce a black-on-white image. The image can also be compressed with any suitable compression algorithm to reduce the size of the stored frame. Typically, after removing background material, the size of a processed frame will be of the order of 20 kbytes, making the storage of large quantities of text-containing frames feasible.

The luminance of the brightest part of the processed frame image is then compared to the average luminance of the processed frame image to derive a luminance ratio for the processed frame image. If the measured luminance ratio is greater than a preset threshold, the frame is passed to a permanent store 10. If, however, the ratio is below the threshold, the frame is discarded. A monitor 12 may be provided to display the processed frame image, and this can be used to set the threshold adaptively, with user intervention if needed. Certain automated dynamic threshold changes may also be made. After the described processing, images which contain text data will show text clearly, whereas the picture frames will have been reduced to a uniform texture and have been discarded.

The next step is to process the selected images with OCR software to derive the text therein. The same processor 8 can be used for this purpose. Various OCR products are available, such as TEXTBRIDGE® from XEROX® that will take as input a bitmap image and create an output text file. The text file can then be imported into a database and subjected to various data clean-up techniques. In the case of, for example, data in the form of rolling credits from broadcast programmes, spell checking against a database of known titles and personal names will produce significant improvement in data quality.

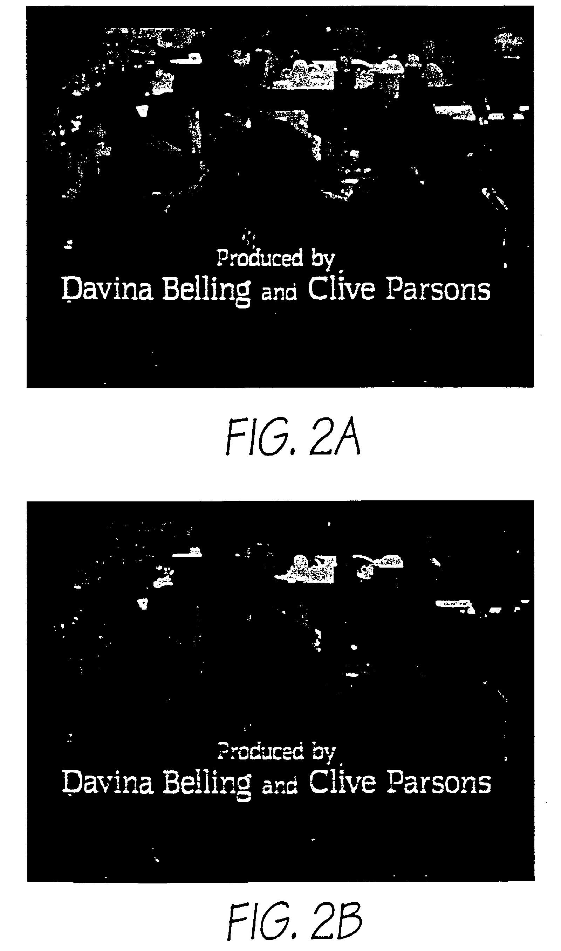

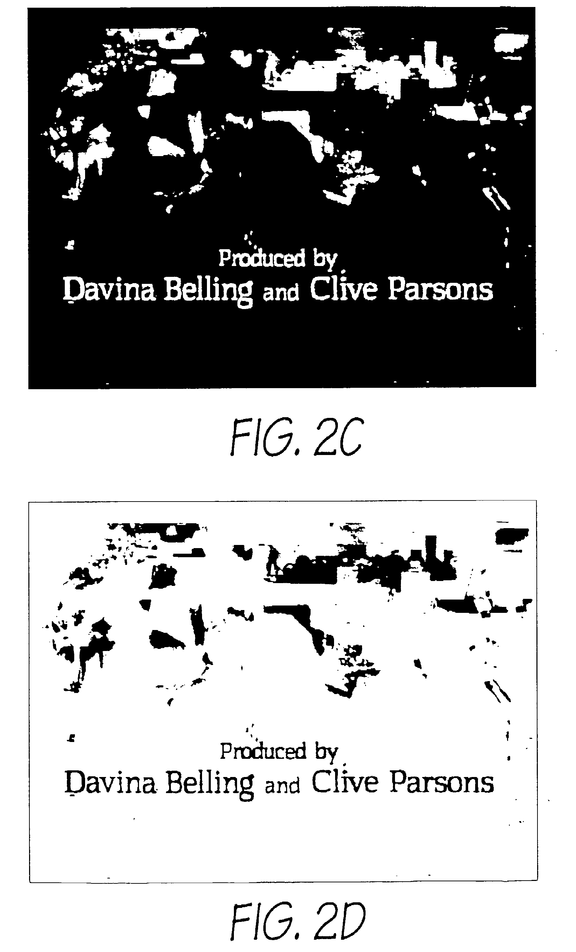

Figure 2 shows sample frame images taken at various stages in the process. Figure 2A shows the image captured by the frame grabber 4 after conversion to 256 shades of grey. Figure 2B shows the same frame after conversion to 16 shades of grey. Figure 2C shows the image in a "dropout" format with only two tones (e.g. black and white) . The luminance threshold for converting to one tone or the other is set to exclude as much of the non-text data as possible. Here, there were several bright points on the background image. This image is then inverted to give the black-on-white image shown in Figure 2E. This image can be fed to the OCR program which will readily recognise the words shown and also deliver some random characters, which are easily recognised as such. Spell checking and the training facilities provided with most OCR software correct the errors of recognition to leave just the text data required as the output of the process.

It has been found that the accuracy of the process when applied to television production images is close to 100% with slightly reduced accuracy when identifying data from the credits of feature films since these are normally produced for cinema and are consequently broadcast in a smaller size. Titles of programmes can normally be read with good accuracy. Poor performance will be encountered in the few situations where the text data of the credit has been made legible by means other than heightened luminance. This is unusual. In some cases, however, hard-edge techniques may be used to enable text to be picked out by the viewer from a background of the same luminance.

Since only a proportion of the captured image needs to be selected, the process can produce text output virtually instantaneously. Therefore, the process can be used to switch the video stream from the source 2. For example, if a broadcaster wishes to divert the broadcasts of news or weather programmes to an Internet site, the detection of the text titles of these programmes by the processor 8 can be used to control a switch (not shown) to divert the video stream. Similarly, the detection of certain text data may be used to trigger selective recording of a broadcast. For example, characteristic text data at breaks in programmes can be used to record the advertisements or stop a recording process so that they are eliminated.

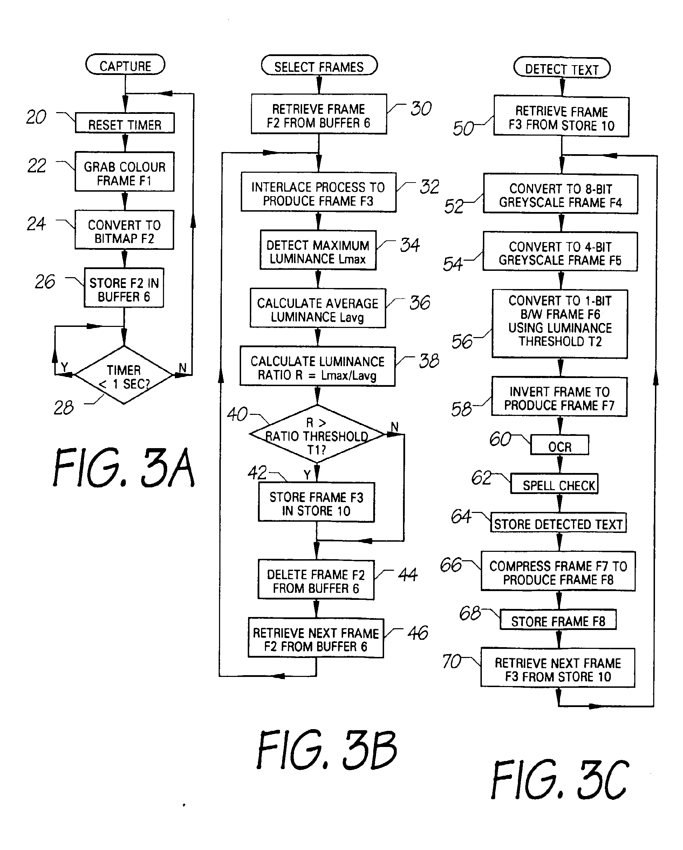

The methods mentioned above will now be described in more detail with reference to the flow diagrams of Figures 3A to 3C. Referring first to Figure 3A showing the capture method, in step 20, a timer is reset, and then in step 22 a colour frame F1 is grabbed by the frame grabber 4. In step 24, the frame F1 is converted by the frame grabber 4 to produce a bitmap frame F2. In step 26, the frame F2 is stored in the buffer 6. The process waits at step 28 until the timer has reached 1 second, and then loops back to step 20, whereupon the timer is reset and the next colour frame F1 is grabbed in step 22.

Referring now to Figure 3B showing the frame selection method, in step 30, a frame F2 is retrieved from the buffer 6. Then, in step 32, an interlace process, as described in more detail in the next paragraph, is performed on the frame F2 to produce a frame F3. Then, in step 34, the luminance Lmax of the brightest part of the frame F3 is detected. This may be the luminance of the brightest pixel in the frame F3, but more preferably is determined by dividing the frame F3 into an array of patches and determining the average luminance of the patch with the highest average luminance. Then, in step 34, the average luminance Lavg of the complete frame F3 is calculated. In step 38, the ratio R = Lmax/Lavg of the maximum luminance to the average luminance is calculated. In step 40, it is determined whether this calculated luminance ratio R is greater than a threshold value Tl. If so, in step 42, the frame F3 is stored in the store 10 for further processing as will be described with reference to Figure 3C. If not, or once the frame F3 has been stored in step 42, then in step 44 the frame F2 is deleted from the buffer and the next frame F2 is retrieved from the buffer 6 in step 46. The process then loops back to step 32 described above.

One form of interlace method mentioned in the previous paragraph comprises the steps of replacing the value P(i, j) of each pixel with the average of its value P(i, j) and the value P(i, j + 1) of the corresponding pixel in the next line (the last line then being discarded). This has the effect of averaging the odd and even fields of the frame. Another form of interlace method comprises the steps of replacing the value P(i, j) of each pixel with the value P(i, 2j) of the corresponding pixel in the line with twice its line number (the lower half of the frame then being discarded). This has the effect of discarding the odd field from the frame and halving the frame height. A further form of interlace method comprises the steps of replacing the value P(i, 2j) of each pixel in the even lines with the value P(i, 2j-1) of the corresponding pixel in the previous odd line. This has the effect of discarding the even field from the frame while maintaining the frame height. Yet another form of interlace method comprises the steps of replacing the value P(i, 2j) of each pixel in the even lines with the average ½(P(i, 2j-1) + P(i, 2j+1)) of the values P(i, 2j-1) and P(i, 2j+1) of the corresponding pixels in the previous and next odd lines. This has the effect of replacing the even field with an interpolated odd field.

Referring now to Figure 3C illustrating the text detection method, in step 50, a frame F3 is retrieved from the store 10. In step 52, the frame F3 is converted to an 8-bit greyscale frame F4, as exemplified by Figure 2A. Then, in step 54, the frame F4 is converted to a 4-bit greyscale frame F5, as exemplified by Figure 2B. Then, in step 56, the frame F5 is converted to a 1-bit black-and-white frame F6, using a luminance threshold T2, as exemplified by Figure 2C. Then, in step 58, the frame F6 is inverted to produce a frame F7, as exemplified by Figure 2D. Then, in step 60, the frame F7 is subjected to a character recognition process and optionally, in step 62, a spell checking process to produce a string of text. In step 64, the text is stored. In optional steps 66 and 68, the frame F7 is compressed to produce a frame F8 which is stored for later reference. In step 70, the next frame F3 is retrieved from the store 10, and then the text detection process loops back to step 52.

It should be noted that the embodiment of the invention has been described above purely by way of example and that many modifications and developments may be made thereto within the scope of the present invention.

## Claims

1. A method of retrieving text data from a video signal comprising a series of frames, the method comprising the steps of:
capturing a sequence of the frames from the video signal; and
for each captured frame in the sequence:
determining whether or not a ratio of luminance of a brightest part of that captured frame relative to average luminance of that captured frame exceeds a ratio threshold; and
if so, performing a character recognition process on that frame to detect text in that frame.

2. A method as claimed in claim 1, further comprising the step of storing the detected text.

3. A method as claimed in claim 1 or claim 2, further comprising the step of controlling an apparatus in dependence upon the detected text.

4. A method as claimed in any previous claim, further comprising the step of temporarily storing each captured frame before performing the determining step.

5. A method as claimed in any previous claim, further comprising the step of storing each frame for which it determined that the ratio exceeds the ratio threshold.

6. A method as claimed in claim 5, further comprising the step of discarding each frame, for which it determined that the ratio does not exceed the ratio threshold.

7. A method as claimed in any preceding claim, wherein each captured frame comprises a pair of captured fields of interlaced lines.

8. A method as claimed in claim 7, further comprising the step, before the determining step, of transforming each captured frame to average spatially-adjacent pairs of lines in that frame.

9. A method as claimed in claim 7 or 8, further comprising the step, before the determining step, of transforming each captured frame by discarding one of the respective captured fields.

10. A method as claimed in claim 9, further comprising the step, before the determining step, of further transforming each captured frame by synthesising the respective discarded field from the other captured field.

11. A method as claimed in any preceding claim, wherein the video signal has a frame rate, and the captured images are captured at a capture rate slower than the frame rate.

12. A method as claimed in any preceding claim, further comprising the step of varying the ratio threshold.

13. A method as claimed in any preceding claim, wherein the video signal is a colour video signal.

14. A method as claimed in claim 13, further comprising the step, before the character recognition step, of transforming each captured frame to a black-and-white frame in dependence upon a luminance threshold.

15. A method as claimed in claim 14, further comprising the step of varying the luminance threshold.

16. A method as claimed in any preceding claim, wherein the video signal is a broadcast television signal.

17. A method as claimed in any preceding claim, wherein the video signal is a playback signal of a recording of a broadcast television signal.

18. A method of retrieving text data from a broadcast image, comprising the steps of:
capturing a sequence of frame images from a source at predetermined intervals;
processing the frame images;
measuring a ratio of the luminance of a brightest part of the processed frame image relative to a background part of the processed frame image;
selecting processed frame images where the ratio exceeds a predetermined threshold; and processing the selected images with OCR software to read text in the selected images.

19. An apparatus for retrieving text data from a video signal comprising a series of frames, the apparatus comprising:
means (such as a frame grabber) for capturing a sequence of the frames from the video signal;
means (such as a programmed processor and associated memory) for determining whether or not a ratio of luminance of a brightest part of each captured frame relative to average luminance of that captured frame exceeds a ratio threshold; and
means (such as the, or another, programmed processor and associated memory) for performing a character recognition process on that frame to detect text in that frame.

20. An apparatus for retrieving text data from a broadcast image, comprising:
means (such as a frame grabber) for capturing a sequence of frame images from a source at predetermined intervals;
means (such as a programmed processor and associated memory) for processing the frame images;
means (such as the, or another, programmed processor and associated memory) for measuring a ratio of the luminance of a brightest part of the processed frame image relative to a background part of the processed frame image;
means (such as the, or another, programmed processor and associated memory) for selecting processed frame images where the ratio exceeds a predetermined threshold; and
means (such as the, or another, programmed processor and associated memory) for processing the selected images with OCR software to read text in the selected images.
